# EUROPÄISCHE PATENTSCHRIFT

(11) **EP 0 636 819 B1**
(45) Veröffentlichungstag und Bekanntmachung des Hinweises auf die Patenterteilung: **25.09.1996**
(21) Anmeldenummer: 94111687.3
(22) Anmeldetag: 27.07.1994
(51) Int. Cl.: F16H 61/32, F16H 63/30

(54) **Schaltvorrichtung für mehrstufige Schaltgetriebe**
Shift mechanism for multi ratio gearbox
Mécanisme de sélection des vitesses d'un transmission

(30) Priorität: 31.07.1993 DE 4325739
(43) Veröffentlichungstag der Anmeldung: 01.02.1995
(73) Patentinhaber: ZF FRIEDRICHSHAFEN Aktiengesellschaft, D-88038 Friedrichshafen (DE)
(72) Erfinder: Gazyakan, Ünal, D-88045 Friedrichshafen (DE); Bailly, Gerhard, D-88046 Friedrichshafen (DE)

(56) Entgegenhaltungen:
- EP-A- 0 481 168
- WO-A-93/10377
- WO-A-93/10379
- DE-A- 4 137 143
- US-A- 4 440 035
- PATENT ABSTRACTS OF JAPAN vol. 10, no. 218 (M-503) 30. Juli 1986 & JP-A-61 055 461 (MASANOBU FUKUZUMI) 19. März 1986
- PATENT ABSTRACTS OF JAPAN vol. 13, no. 265 (M-839) 19. Juni 1989 & JP-A-01 065 360 (MITSUBISHI ELECTRIC CORP) 10. März 1989

## Beschreibung

Die Erfindung betrifft eine Schaltvorrichtung für mehrstufige Schaltgetriebe von Kraftfahrzeugen nach der im Oberbegriff von Anspruch 1 sowie Anspruch 2 näher definierten Art.

Eine Schaltvorrichtung dieser Art ist in der DE-A 41 37 142 beschrieben. Hierbei erfolgt die Betätigung einer Schaltstange als Schaltelement durch einen Elektromotor in Verbindung mit einem Kurvengetriebe. Die Schaltstange ist parallel zur Getrieberäderachse verschiebbar, wobei für die Schaltschwingen diesen zugeordnete, einzeln betätigbare Koppelmechaniken vorhanden sind. Über eine nicht näher dargestellte Kupplungseinrichtung kann in Abhängigkeit von der Stellung bzw. Schaltung der Kupplungseinrichtung die Schaltstange mit der Ausgangswelle des Elektromotors so verbunden werden, daß die Schaltstange entweder gedreht oder axial verschoben wird.

Der vorliegenden Erfindung liegt als Aufgabe die Ausgestaltung der Kupplungseinrichtung derart zugrunde, daß die Schaltvorrichtung einfach und platzsparend im Aufbau sein soll, eine sichere Schaltung und eine einfache Fertigung und Montage erlauben soll.

Erfindungsgemäß wird diese Aufgabe durch die im kennzeichnenden Teil von Anspruch 1 sowie Anspruch 2 genannten Merkmale gelöst.

Eine gattungsähnliche Anordnung mit einer Rutschkupplung ist aus der US-A 4 440 035 bekannt. Eine weitere gattungsähnliche Anordnung zeigt die EP-A 481 168, bei der eine Spindelmutter mit dem Rotor eines Elektromotors fest verbunden ist.

In einer sehr einfachen und platzsparenden Weise ist die Spindelmutter der Spindeleinrichtung mit dem Rotor des Elektromotors fest verbunden oder stellt sogar einen Teil des Rotors dar. Durch diese Ausgestaltung ergibt sich insbesondere eine sehr kurze Bauweise. Zur Erzeugung der Schaltkräfte ist wegen der Spindelübersetzung nur ein kleines Motormoment erforderlich und die Schaltkrafterzeugung, d. h. die Schaltvorrichtung kann auf einfache Weise in das Getriebe integriert werden.

Die eine alternative Ausgestaltung besteht nach Anspruch 1 darin, daß die Kupplung als Rutschkupplung ausgebildet ist, wobei das Kupplungsmoment durch eine Federeinrichtung auf ein für den Wählvorgang erforderliches Beschleunigungsmoment begrenzt wird. Für eine translatorische Bewegung der Schaltstange rastet eine elektrisch, elektrodynamisch oder pneumatisch betätigte Koppelmechanik positionsgenau in Nuten ein und sorgt für eine drehstarre Verbindung zwischen der Spindel und einem Gehäuse. Ein im Elektromotor integriertes Winkelmeßsystem steuert die Lage der gewünschten Längsnut zur Koppelmechanik an, bevor diese einrastet. Danach bestimmt ein Endschalter oder das Winkelmeßgerät das Ende der translatorischen Bewegung.

Durch die Verwendung einer Rutschkupplung ist eine einfache Steuerung möglich.

In einer konstruktiv einfachen Ausführungsform kann dabei vorgesehen sein, daß die Rutschkupplung zwischen einer Stirnseite des Rotors und einer radialen Erweiterung eines drehfest mit der Schaltstange verbundenen Koppelteiles angeordnet ist.

Von Vorteil ist es, wenn die Rutschkupplung mit einer Nachstelleinrichtung versehen ist.

In diesem Falle läßt sich das Kupplungsmoment exakt einstellen und bei Verschleiß auch auf einfache Weise nachstellen.

Als Nachstelleinrichtungen sind die verschiedenartigsten Einrichtungen möglich. In einfacher Weise läßt sich hierfür eine Einstellmutter oder Einstellschraube verwenden, durch die die Vorspannung der Feder einstellbar ist.

Alternativ zu der Ausgestaltung mit einer Rutschkupplung ist nach Anspruch 2 eine Schaltkupplung vorgesehen, die zur drehfesten Verbindung des Rotors mit der Spindel durch ein Schaltglied mit dem Rotor verbindbar ist. Die Schaltkupplung weist Schaltverzahnungen auf, die jeweils in einer Stirnseite des Rotors und einem Koppelteil eingeformt sind, wobei das Koppelteil drehfest mit der Schaltstange verbindbar ist.

Die Betätigung der Schaltkupplung kann auf beliebige Weise erfolgen.

Eine einfache Möglichkeit hierfür kann darin bestehen, daß Nachfolgend sind die zwei Ausführungsbeispiele der Erfindung anhand der Zeichnung beschrieben. Es zeigt:
- Fig. 1: einen Längsschnitt (Halbschnitt) durch eine Ausführungsform der erfindungsgemäßen Schaltvorrichtung und
- Fig. 2: eine weitere Ausführungsform der erfindungsgemäßen Schaltvorrichtung, ebenfalls im Längsschnitt.

Eine Spindeleinrichtung besteht aus einer Spindelmutter 1 und einer Spindel 2 mit zwischen den beiden vorstehend genannten Teilen in Umfangsnuten angeordneten Kugeln 3. Die Spindeleinrichtung stellt somit eine sogenannte Kugelmutterspindel dar, wobei über spiralförmig verlaufende Nuten bei einer Drehung der Spindelmutter 1 über die Kugeln 3 die Spindel 2 eine Axialbewegung ausführt.

In einem Gehäuse 4 der Schaltvorrichtung ist ein Elektromotor mit einem Stator 5 und einem Rotor 6 angeordnet. Der Rotor 6 ist im Bereich der inneren Umfangswand mit einem Absatz versehen, der eine Vergrößerung des Innendurchmessers ergibt. In diesen freien Bereich ist die Spindelmutter 1 eingesetzt, wobei für eine feste Verbindung zwischen dem Rotor 6 und der Spindelmutter 1 gesorgt ist. Der Rotor 6 ist auf einer Seite über ein Wälzlager 7 in Form eines geschlossenen Lagers gelagert, während auf der anderen Seite die Lagerung durch ein weiteres Wälzlager 8 erfolgt, das auch die Lagerung der Spindelmutter 1 übernimmt. Durch die feste Verbindung der Spindelmutter 1 mit dem Rotor 6 ist auf diese Weise der Rotor 6 an beiden Enden gelagert. Die Spindel 2 ist entweder einstückig oder fest mit einer axial sich an die Spindel 2 anschließenden Schaltstange bzw. Schubstange 9 verbunden.

In das Innere der Spindel 2 ragt von der von der Schaltstange 9 abgewandten Seite ein Koppelteil 10 in Form eines Stabes oder einer Stange. Das Koppelteil 10 ist an seinem aus der Spindel 2 herausragenden Ende mit einem Flansch 11 versehen. Das Koppelteil 10 ist drehfest, jedoch axial verschiebbar mit der Spindel 2 verbunden.

Der Flansch 11 besitzt einen Außendurchmesser, der annähernd dem Außendurchmesser des Rotors 6 entspricht, und er liegt vor einer Stirnseite des Rotors 6. Zwischen dem Flansch 11 und der Stirnseite 12 des Rotors 6 befindet sich ein Reibbelag 13, der mit einem der beiden Teile verbunden ist und damit eine Rutschkupplung darstellt. Eine Feder 16, deren Verspannung durch eine Einstellschraube 17 mit einer Einstellmutter 17B veränderbar ist, drückt von außen über einen Andruckring 15 und ein Axialkugellager 14 auf den Flansch 11.

Die Schaltstange 9 ist mit einer Koppelmechanik 18 versehen. Die Koppelmechanik 18 kann eine elektrisch, elektrodynamisch, hydraulisch oder pneumatisch betätigbare Verriegelung sein, die die Spindel 2 bzw. die Schaltstange 9 mit einem Gehäuseteil 19 drehfest verbindet und in diesem unter einer vorgegebenen Drehwinkelposition axial führt. Hierzu rastet ein Elektromagnet 20 mit einem federbelasteten Schaltstift 21 im stromlosen Zustand des Elektromagneten 20 in eine axiale Nut 22 einer Verdickung der Schaltstange 9 ein.

Zur Abdichtung ist ein Dichtring 30 zwischen dem Koppelteil 10 und dem Rotor 6 vorgesehen.

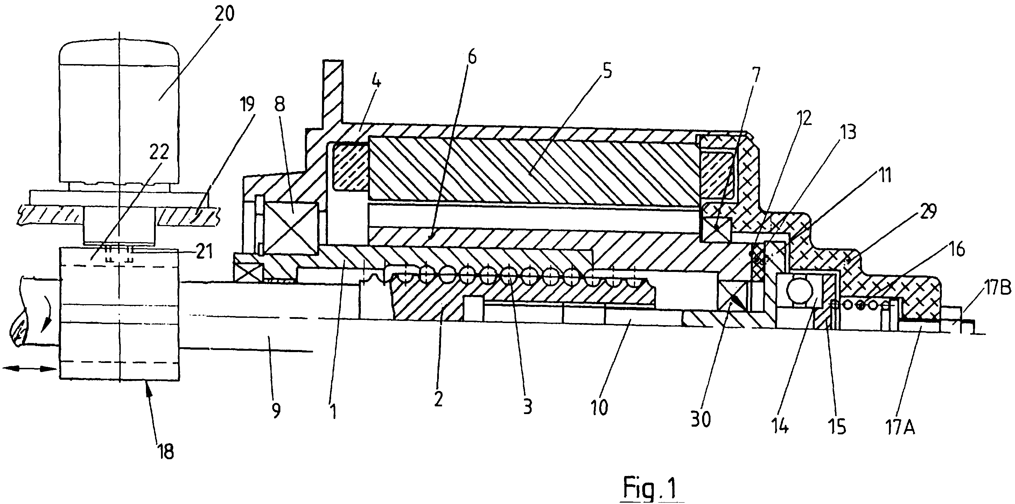

Die Schaltvorrichtung nach dem Ausführungsbeispiel der Fig. 1 funktioniert nun auf folgende Weise:

In einer ersten Schaltphase, in der die Gasse gewählt wird, entsperrt der Elektromagnet die Verriegelung und der Elektromotor dreht die Schaltstange 9 und die Spindelmutter 2, die mit der Spindel 2 über die Rutschkupplung 13 verbunden ist und daher diese mitdreht. Nach einer vorgegebenen Verdrehung, z. B. um 90°, ist die gewünschte Schaltgasse gewählt.

In einer zweiten Schaltphase, in der Gang geschaltet wird, wird der Elektromagnet 20 stromlos geschaltet, so daß der Schaltstift 21 durch eine Federkraft in die Längsnut 22 eingeschoben wird. Auf diese Weise wird die Schaltstange 9 im Gehäuse 19 festgehalten; die Rutschkupplung 13, die einen begrenzten Kraftschluß zwischen der Spindelmutter 1 bzw. dem Rotor 6 und der Spindel 2 herstellt, rutscht durch. In diesem Falle wird die Drehbewegung der Mutter 1 in eine translatorische Bewegung der Spindel 2 und damit eine axiale Verschiebung der Schaltstange 9 umgewandelt. Mit der translatorischen Bewegung wird dann der Gang geschaltet, und zwar je nach Drehrichtung des Elektromotors der eine oder andere zur Gasse gehörende Gang.

Die Rutschkupplung 13 ist durch die Kraft der Feder 16 geschlossen, solange zum Schalten lediglich das Reibungs- und Beschleunigungsmoment der Wählmechanik überwunden werden muß. Die Kupplung ist praktisch in ihrem Übertragungsverhalten entsprechend ausgelegt oder eingestellt.

Eine Positionierung der Schaltstange 9 bezüglich ihrer axialen Verschiebung kann auf einfache Weise durch einen Endschalter oder durch ein im Elektromotor integriertes Winkelmeßsystem (nicht dargestellt) erreicht werden.

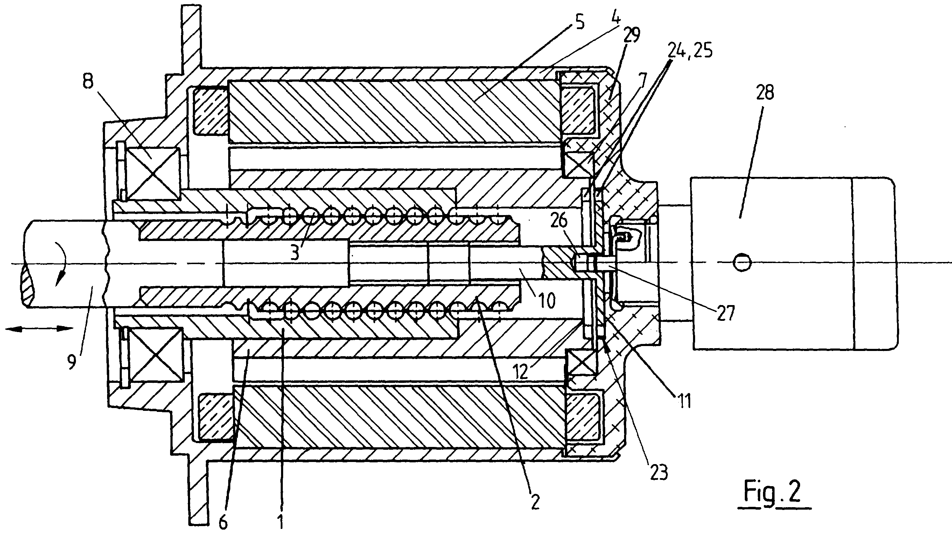

Das Ausführungsbeispiel gemäß Fig. 2 ist grundsätzlich von gleicher Bauart, weshalb für die gleichen Bauteile auch dieselben Bezugszeichen verwendet worden sind. Der wesentliche Unterschied liegt lediglich darin, daß statt einer kraftschlüssigen Verbindung zwischen dem Rotor 6 und dem Koppelteil 10 durch eine Rutschkupplung 13 als Kraftschlußverbindung nunmehr eine Formschlußverbindung vorgesehen ist. Hierzu dient eine Schaltkupplung 23. Die Schaltkupplung 23 weist Schaltverzahnungen 24 und 25 auf. Die Schaltverzahnung 24 liegt in der Stirnseite 12 des Rotors 6 und die Schaltverzahnung 25 im Bereich des äußeren Umfanges des Flansches 11 des Koppelteiles 10. Das Koppelteil 10 ist weiterhin mit einer zentralen Bohrung 26 versehen, in die ein Schaltstift 27 eingepreßt werden kann. Der Schaltstift 27 ist Teil eines Schaltmagneten 28, der stirnseitig an einen Deckel 29 des Gehäuses 4 der Schaltvorrichtung koaxial zur Schaltstange 9 angeflanscht ist. Das Koppelteil 10 ist in gleicher Weise, wie bei dem Ausführungsbeispiel nach der Fig. 1, in einer Axialbohrung der Spindel 2 axial verschiebbar, jedoch drehfest mit der Spindel gelagert.

Das Ausführungsbeispiel nach der Fig. 2 funktioniert auf folgende Weise:

Bei Betätigung des Schaltmagneten 28 wird gegen die Kraft einer Feder (nicht dargestellt) der Schaltstift 27 ausgerückt, wobei er aufgrund seiner Einpressung in die Bohrung 26 das Koppelteil 10 axial in der Zeichnung nach links verschiebt und damit die Schaltverzahnungen 24 und 25 miteinander in Kontakt geraten. Auf diese Weise wird eine drehfeste Verbindung zwischen dem Rotor 6, der Spindel 2 und der Schaltstange 9 geschaffen. Bei einer gleichzeitigen Aktivierung des Elektromotors findet auf diese Weise eine Verdrehung der Schaltstange 9 und damit eine Verbindung mit der gewünschten Schaltschwinge statt.

Zur Durchführung der zweiten Schaltphase wird der Schaltmagnet 28 stromlos geschaltet, wobei durch die Kraft der Feder der Schaltstift 27 nach rechts zurückgezogen wird. Durch diese Bewegung wird ebenfalls die Schaltkupplung 23 nach rechts bewegt, wobei die Schaltverzahnung 25 in einer Ausnehmung des Gehäuses 4 aufgenommen wird. In dieser Lage ist die Spindel 2 an einer Drehbewegung gehindert, so daß eine Drehung des Rotors 6 in einer Axialverschiebung der Spindel 2 resultiert, womit der gewünschte Gang geschaltet wird.

Bei diesem Ausführungsbeispiel übernimmt der Schaltmagnet 28 die Funktionsweise des Elektromagneten 20.

Weitere Betätigungseinrichtungen zum Schalten eines Ganges sind bei beiden Ausführungsbeispielen nicht erforderlich. Eines der wesentlichen Merkmale besteht praktisch darin, daß mit nur einem einzigen Elektromotor zwei Bewegungen durchgeführt werden, um einen gewünschten Gang zu schalten, nämlich einmal eine Drehbewegung und zum zweiten eine translatorische Bewegung.

## Patentansprüche

1. Schaltvorrichtung für Mehrstufenschaltgetriebe von Kraftfahrzeugen mit einem einen Rotor (6) und einen Stator (5) aufweisenden Elektromotor, der mit einer im wesentlichen parallel zur Räderachse des Mehrstufenschaltgetriebes verschiebbaren Schaltstange (9) wie folgt verbindbar ist:
- in einer ersten Schaltphase ist die Schaltstange (9) über eine zwischen ihr und dem Rotor (6) angeordnete und eingeschaltete Kupplung (13) mit dem Elektromotor drehverbunden, und
- in einer zweiten Schaltphase wird mittels einer eine Spindelmutter (1) und eine Spindel (2) aufweisenden Spindeleinrichtung die Drehbewegung des Elektromotors in eine translatorische Bewegung der mit der Spindel (2) fest verbundenen Schaltstange umgewandelt, dadurch gekennzeichnet,
- daß die Spindelmutter (1) mit dem Rotor (6) des Elektromotors fest verbunden ist oder einen Teil des Rotors (6) darstellt, und
- daß die Kupplung (13) eine Rutschkupplung ist, die zwischen dem Rotor (6) und der Spindel (2) oder einem mit der Spindel drehfest verbundenen Teil angeordnet ist.

2. Schaltvorrichtung für Mehrstufenschaltgetriebe von Kraftfahrzeugen mit einem einen Rotor (6) und einen Stator (5) aufweisenden Elektromotor, der mit einer im wesentlichen parallel zur Räderachse des Mehrstufenschaltgetriebes verschiebbaren Schaltstange (9) wie folgt verbindbar ist:
- in einer ersten Schaltphase ist die Schaltstange (9) über eine zwischen ihr und dem Rotor (6) angeordnete und eingeschaltete Schaltkupplung (23) mit dem Elektromotor drehverbunden, und
- in einer zweiten Schaltphase wird mittels einer eine Spindelmutter (1) und eine Spindel (2) aufweisenden Spindeleinrichtung die Drehbewegung des Elektromotors in eine translatorische Bewegung der mit der Spindel (2) fest verbundenen Schaltstange umgewandelt, dadurch gekennzeichnet,
- daß die Spindelmutter (1) mit dem Rotor (6) des Elektromotors fest verbunden ist oder einen Teil des Rotors (6) darstellt, und
- daß die Schaltkupplung (23) Schaltverzahnungen (24, 25) aufweist, die jeweils in einer Stirnseite (12) des Rotors (6) und einem Koppelteil (10) eingeformt sind, wobei das Koppelteil (10) drehfest und axialverschiebbar mit der Schaltstange (9) verbunden ist .

3. Schaltvorrichtung nach Anspruch 1, dadurch **gekennzeichnet**, daß die Rutschkupplung (13) durch eine Federeinrichtung (16) für eine drehfeste Verbindung mit dem Rotor (6) des Elektromotors in Schließstellung gehalten ist und daß für die translatorische Bewegung der Schaltstange (9) eine elektrische, elektrodynamische oder pneumatische Koppelmechanik (18) vorgesehen ist, die für eine drehstarre Verbindung unter vorbestimmten Drehwinkelpositionen zwischen der Schaltstange (2) und einem Gehäuse (4, 19) sorgt.

4. Schaltvorrichtung nach Anspruch 3, dadurch **gekennzeichnet**, daß der Elektromotor ein integriertes Winkelmeßsystem hat.

5. Schaltvorrichtung nach Anspruch 1 oder 3, dadurch **gekennzeichnet**, daß die Rutschkupplung (13) zwischen einer Stirnseite (12) des Rotors und einer radialen Erweiterung (11) eines drehfest mit der Schaltstange (9) verbundenen Koppelteiles (10) angeordnet ist.

6. Schaltvorrichtung nach Anspruch 3 oder 5, dadurch **gekennzeichnet**, daß die Rutschkupplung (13) mit einer Nachstelleinrichtung (17A, 17B) versehen ist.

7. Schaltvorrichtung nach Anspruch 6, dadurch **gekennzeichnet**, daß die Nachstelleinrichtung eine Einstellmutter (17B) oder eine Einstellschraube (17A) aufweist, durch die die Vorspannung der Feder (16) einstellbar ist.

8. Schaltvorrichtung nach Anspruch 3, dadurch **gekennzeichnet**, daß die Koppelmechanik (18) einen Elektromagneten (20) mit einem Schaltstift (21) aufweist, der bei stromlosem Zustand des Elektromagneten (20) in eine Längsnut der Schaltstange (9) ragt.

9. Schaltvorrichtung nach Anspruch 2, dadurch **gekennzeichnet**, daß die Schaltkupplung (23) über einen Schaltmagneten (28) und einen das Koppelteil (10) betätigenden Schaltbolzen (27) geschaltet wird.

10. Schaltvorrichtung nach Anspruch 9, dadurch **gekennzeichnet**, daß der Schaltbolzen (27) drehfest ist und in eine axiale Bohrung (26) des Koppelteiles (10) eingesetzt ist.

## Claims

1. Shift mechanism for multi-ratio gearboxes of motor vehicles with an electric motor comprising a rotor (6) and a stator (5), said electric motor being capable of being connected in the following way to a shift rod (9) which is capable of being displaced substantially parallel to the wheel axis of the multi-ratio gearbox:
- in a first shift phase the shift rod (9) is rotatably connected to the electric motor via a clutch (13) which is arranged and interpolated between said shift rod and the rotor (6), and
- in a second shift phase the rotary motion of the electric motor is converted by means of a spindle device comprising a spindle nut (1) and a spindle (2) into a translational movement of the shift rod which is rigidly connected to the spindle (2), characterised in that
- the spindle nut (1) is rigidly connected to the rotor (6) of the electric motor or constitutes a part of the rotor (6), and
- the clutch (13) is a friction clutch arranged between the rotor (6) and the spindle (2) or a part that is connected to the spindle in non-rotating manner.

2. Shift mechanism for multi-ratio gearboxes of motor vehicles with an electric motor comprising a rotor (6) and a stator (5), said electric motor being capable of being connected in the following way to a shift rod (9) which is capable of being displaced substantially parallel to the wheel axis of the multi-ratio gearbox:
- in a first shift phase the shift rod (9) is rotatably connected to the electric motor via a shift clutch (23) which is arranged and interpolated between said shift rod and the rotor (6), and
- in a second shift phase the rotary motion of the electric motor is converted by means of a spindle device comprising a spindle nut (1) and a spindle (2) into a translational movement of the shift rod which is rigidly connected to the spindle (2), characterised in that
- the spindle nut (1) is rigidly connected to the rotor (6) of the electric motor or constitutes a part of the rotor (6), and
- the shift clutch (23) comprises shift teeth (24, 25) which in each case are moulded within a front face (12) of the rotor (6) and in a coupling part (10), the coupling part (10) being connected to the shift rod (9) in such a manner as to be non-rotating and axially displaceable.

3. Shift mechanism according to Claim 1, **characterised in that** in order to enable a non-rotating connection with the rotor (6) of the electric motor the friction clutch (13) is held in the closed position by a spring device (16) and in that in order to enable the translational movement of the shift rod (9) an electrical, electrodynamic or pneumatic coupling mechanism (18) is provided which ensures a non-rotatable connection in predetermined rotary-angle positions between the shift rod (2) and a casing (4, 19).

4. Shift mechanism according to Claim 3, **characterised in that** the electric motor has an integrated angle-measuring system.

5. Shift mechanism according to Claim 1 or 3, **characterised in that** the friction clutch (13) is arranged between a front face (12) of the rotor and a radial extension (11) of a coupling part (10) that is connected to the shift rod (9) in non-rotatable manner.

6. Shift mechanism according to Claim 3 or 5, **characterised in that** the friction clutch (13) is provided with a readjusting device (17A, 17B).

7. Shift mechanism according to Claim 6, **characterised in that** the readjusting device comprises an adjusting nut (17B) or an adjusting screw (17A) by means of which the initial load of the spring (16) is capable of being adjusted.

8. Shift mechanism according to Claim 3, **characterised in that** the coupling mechanism (18) comprises an electromagnet (20) with a shift pin (21) which protrudes into a longitudinal groove in the shift rod (9) when the electromagnet (2) is not supplied with current.

9. Shift mechanism according to Claim 2, **characterised in that** the shift clutch (23) is shifted via a shift magnet (28) and a shift bolt (27) which actuates the coupling part (10).

10. Shift mechanism according to Claim 9, **characterised in that** the shift bolt (27) is non-rotatable and inserted in an axial bore (26) of the coupling part (10).

## Revendications

1. Mécanisme de sélection des vitesses pour une boîte de vitesses à plusieurs rapports d'un véhicule automobile ayant un moteur électrique comportant un rotor (6) et un rotor (5), ce moteur électrique étant couplé comme suit à un levier de commande de vitesses (9) coulissant sensiblement selon une direction parallèle à l'axe des roues de la boîte de vitesses à plusieurs rapports :
- dans une première phase de commande des vitesses, le levier de vitesses (9) est couplé en rotation avec le moteur électrique par l'intermédiaire d'un couplage enclenché (13) disposé entre ce levier et le rotor (6),
- dans une deuxième phase de commande des vitesses, un système à vis comportant un écrou (1) et une vis (2) transforme le mouvement de rotation du moteur électrique en un déplacement en translation du levier de commande solidaire de la vis (2), caractérisé en ce que,
- l'écrou (1) est solidaire du rotor (6) du moteur électrique ou constitue une partie du rotor (6), et
- le couplage (13) est un embrayage à friction, disposé entre le rotor (6) et la vis (2) ou une pièce solidaire en rotation de cette vis.

2. Mécanisme de sélection des vitesses pour une boîte de vitesses à plusieurs rapports d'un véhicule automobile ayant un moteur électrique comportant un rotor (6) et un rotor (5), ce moteur électrique étant couplé comme suit à un levier de commande de vitesses (9) coulissant sensiblement selon une direction parallèle à l'axe des roues de la boîte de vitesses à plusieurs rapports :
- dans une première phase de commande des vitesses, le levier de vitesses (9) est couplé en rotation avec le moteur électrique par l'intermédiaire d'un embrayage commandé (23) disposé entre ce levier et le rotor (6),
- dans une deuxième phase de commande des vitesses, un système à vis comportant un écrou (1) et une vis (2) transforme le mouvement de rotation du moteur électrique en un déplacement en translation du levier de commande solidaire de la vis (2), caractérisé en ce que,
- l'écrou (1) est solidaire du rotor (6) du moteur électrique ou constitue une partie du rotor (6), et
- l'embrayage (23) comporte des dentures (24, 25) de commande, qui sont respectivement engagées dans une face frontale (12) du rotor (6) et une pièce de couplage (10), cette pièce de couplage (10) étant liée en rotation avec le levier de vitesses (9) et mobile axialement.

3. Mécanisme de sélection selon la revendication 1, **caractérisé** en ce que l'embrayage à friction (13) est maintenu enclenché par un dispositif à ressort (16) pour assurer une liaison fixe en rotation avec le rotor (6) du moteur électrique, et en ce qu'il comporte un mécanisme d'enclenchement (18) électrique, électrodynamique ou pneumatique pour assurer le déplacement en translation du levier de vitesses (9), ce mécanisme étant agencé pour réaliser une liaison rigide sous un angle de rotation prédéterminé, entre le levier de vitesses (9) et un boîtier (4, 19).

4. Mécanisme de sélection des vitesses selon la revendication 3, **caractérisé** en ce que le moteur électrique comporte un système angulaire intégré.

5. Mécanisme de sélection des vitesses selon la revendication 1 ou 3, **caractérisé** en ce que l'embrayage à friction (13) est monté entre une face frontale (12) du rotor et un élargissement radial (11) d'une pièce de couplage (10) solidaire en rotation du levier de vitesses (9).

6. Mécanisme de sélection des vitesses selon la revendication 3 ou 5, **caractérisé** en ce que l'embrayage à friction (13) est équipé d'un dispositif de réglage (17A, 17B).

7. Mécanisme de sélection des vitesses selon la revendication 6, **caractérisé** en ce que le dispositif de réglage comporte un écrou de réglage (17B) ou une vis de réglage (17A), permettant de régler la force exercée par le ressort (16).

8. Mécanisme de sélection des vitesses selon la revendication 3, **caractérisé** en ce que le mécanisme de couplage (18) comporte un électro-aimant (20) avec une goupille de commande (21) qui est engagée dans une rainure longitudinale du levier de vitesses (9) lorsque l'électro-aimant n'est pas alimenté en courant électrique.

9. Mécanisme de sélection des vitesses selon la revendication 2, **caractérisé** en ce que l'embrayage (23) est commandé par un boulon de commande (27) activé par l'intermédiaire d'un aimant de commande (28) et de la pièce de couplage (10).

10. Mécanisme de sélection des vitesses selon la revendication 9, **caractérisé** en ce que le boulon de commande (27) est solidaire en rotation de la pièce de couplage (10) et logé dans un alésage axial (26) de cette pièce.
